# EUROPEAN PATENT APPLICATION

(11) **EP 4 692 224 A1**
(43) Date of publication of application: **11.02.2026**
(21) Application number: 24779795.4
(22) Date of filing: 21.03.2024
(51) Int. Cl.: C08L 29/04, B29C 64/118, B29C 64/40, B33Y 10/00, B33Y 70/10, B33Y 80/00, C08L 67/02

(54) **RESIN COMPOSITION, AND MOLDED ARTICLE AND SUPPORT MATERIAL USING SAME**

(30) Priority: 28.03.2023 JP 2023050787
(71) Applicant: Mitsubishi Chemical Corporation, Tokyo 100-8251 (JP)
(72) Inventor: SAKAI Norihito, Tokyo 100-8251 (JP); FUKUDA Junki, Tokyo 100-8251 (JP); UEDA Koudai, Tokyo 100-8251 (JP)
(74) Representative: Vossius & Partner Patentanwälte Rechtsanwälte mbB
(86) International application number: PCT/JP2024/010895
(87) International publication number: WO 2024/203672

(57) **Abstract**

The present invention discloses a resin composition comprising (A) a polyvinyl alcohol resin modified with acid-containing group and (B) a biodegradable polyester, wherein the (B) biodegradable polyester comprises (B1) an aliphatic polyester and (B2) an aromatic-aliphatic polyester at a ratio of (B1)/(B2) of 61/39 to 99/1. This resin composition exhibits excellent water solubility and biodegradability. When used as a support material for fused deposition modeling, wastewater generated after washing off structures made from the support material can be discharged without any specific treatment. When used as a molding material, products made from the molding material can be disposed of.

## Description

### TECHNICAL FIELD

The present invention relates to a resin composition with excellent water solubility and biodegradability. The present invention also relates to a melt-molded article and a support material, using the resin composition.

### BACKGROUND

Polyvinyl alcohol-based resin (PVA-based resin) exhibits excellent water solubility due to its molecular structure containing many hydroxyl groups. One application of PVA-based resin that utilizes this property is its use as a support material in fused deposition modeling (FDM) for manufacturing three-dimensional objects.

Fused deposition modeling is an additive manufacturing technique used to build three-dimensional objects with a defined geometry. The process involves extruding a model material in a semi-fluid state onto a platform or previously solidified layers, and forming an object layer by layer.

When the target three-dimensional object (model structure) has a complex geometry, such as overhangs, upper layers that extend beyond lower layers, or internal cavities, a support structure is simultaneously fabricated alongside the model structure. In fused deposition modeling, this support structure serves as a temporary scaffold, either providing foundational support for upper layers or filling hollow sections during printing.

Since the support structure is not part of the final model structure, it must be removed from the printed object after fabrication. When the support material is water-soluble, such as a PVA-based resin, it can be easily eliminated by rinsing the printed object with water. Once the support material dissolves, the remaining structure is the intended three-dimensional object.

On the other hand, PVA-based resin is known to be hard, have poor impact resistance, and is not easily processed into filament by melt molding. Where such PVA-based resin is used as a support material in fused deposition modeling, filamentary PVA-based resin with improved flexibility is required. To improve the flexibility of PVA-based resin, a known technique involves blending a thermoplastic elastomer such as styrene-ethylene-butylene-styrene block copolymer (SEBS) with the PVA-based resin (for example, International Publication WO 2018/061694 (Patent Document 1) and JP 2019-155917 (Patent Document 2)).

In a resin composition that is a mixture of a thermoplastic elastomer and a PVA-based resin, the thermoplastic elastomer is insoluble in water. Therefore, waste liquid generated during the rinsing process with water is a suspension in which the water-insoluble thermoplastic elastomer is dispersed in aqueous solution of the PVA-based resin. Since the thermoplastic elastomer is not biodegradable, a specific treatment is required before discharging the waste liquid including the thermoplastic elastomer.

In this regard, JP 2018-99788 A (Patent Document 3) suggests a resin composition containing a biodegradable polyester in place of the non-biodegradable SEBS. A specifically disclosed resin composition comprises a PVA-based resin containing 1,2-diol in a side chain and a biodegradable polyester. The patent document also discloses that the resin composition can be used as a support material.

The resin composition proposed in Patent Document 3 has improved water solubility, however, aggregates of the biodegradable polyester remain in the wastewater generated after the support structure is removed with water, and some biodegradable polyester aggregates may remain on the surface of a built or printed object. Therefore, the resin composition used as a support material is still required to be improved.

WO 2021/200153 (Patent Document 4) proposes a support material made from a resin composition free from issues associated with aggregates in waste liquid after the support structure is removed by water-washing process. The PVA-based aqueous solution obtained as the waste liquid, can be drained without a specific post-treatment. The support material adopts a polyvinyl alcohol-based resin modified with a sulfonic acid or its salt-containing group, which has excellent water solubility.

In Example of Patent Document 4, a resin composition containing 43 parts by weight of polybutylene adipate terephthalate (PBAT) as a biodegradable polyester, based on 100 parts by weight of sulfonic acid-modified PVA-based resin, was used as a support material. It demonstrated excellent adhesion to model materials and excellent water solubility. The example also showed that no aggregates remained in the waste liquid generated during the rinsing process.

This resin composition was also shown to adhere well to various model materials such as polylactic acid (PLA), ABS resin, and polyamide

### PRIOR ART

### PATENT DOCUMENT

[Patent Document 1] WO2018/061694
[Patent Document 2] JP2019-155917
[Patent Document 3] JP2018-99788
[Patent Document 4] WO2021/200153

### SUMMARY OF THE INVENTION

### TECHNICAL PROBLEM TO BE SOLVED BY THE INVENTION

The resin composition to be used as not only support material but also melt-molding material. In particular, with the recent growing interest in green chemistry, disposable, water-soluble, and highly biodegradable materials are being considered as alternative plastic materials for molding.

On the other hand, a molding material is required to have both desirable strength and biodegradability, making it possible to be disposed of without any treatment.

The present invention has been made in consideration of the above circumstances, and a purpose of the present invention is to provide a resin composition with excellent water solubility and biodegradability, and usable as a support material as well as a molding material. A molded article made from the molding material exhibits excellent biodegradability, so no specific treatment is required when disposing of the molded article or when discharging wastewater after dissolving it in water.

### MEANS FOR SOLVING THE PROBLEM

Japan is a member state of the Organisation for Economic Cooperation and Development (OECD). Therefore, if a molded article is disposed of or wastewater generated from the molded article is discharged without any special treatment in Japan, the molded article and the wastewater must meet the biodegradability requirements defined by the OECD.

According to the biodegradability requirements, the material is required to be readily degradable in a test specified by the OECD. Specifically, the degree of biodegradation of the material within a specified period of time under conditions specified by the test is 60% or more. However, regarding the supporting material disclosed in examples of Patent Document 2, it was revealed that its degree of biodegradation did not reach 60% in the biodegradability test.

The inventors have investigated combinations of acid-modified PVA-based resin having excellent water solubility, and various biodegradable resins, and have found a combination that satisfies the requirements of water solubility, biodegradability, and melt moldability. Also, the combination has satisfactory strength, flexibility, and adhesion (shapeability) to various model materials so that the resin can be used as a support material. Thus, the present invention was completed.

According to the invention, the following aspects and embodiments of the resin composition are disclosed and provided.
[1] The resin composition comprises (A) a polyvinyl alcohol-based resin modified with an acid-containing group and (B) a biodegradable polyester, wherein the (B) biodegradable polyester comprises (B1) an aliphatic polyester containing an aliphatic diol unit and an aliphatic dicarboxylic acid unit having 2 to 10 carbon atoms in the main chain; and (B2) an aromatic-aliphatic polyester containing an aliphatic diol unit, an aliphatic dicarboxylic acid unit having 2 to 10 carbon atoms in the main chain, and an aromatic dicarboxylic acid unit, and wherein the content ratio of (B1) to (B2), (B1)/(B2), ranges from 61/39 to 99/1.
[2] The resin composition according to [1], wherein the content of the biodegradable polyester (B) based on 100 parts by weight of the polyvinyl alcohol-based resin (A) is from 30 to 60 parts by weight.
[3] The resin composition according to [1] or [2], wherein the aliphatic polyester (B1) is an aliphatic polyester containing an aliphatic dicarboxylic acid unit having 4 to 10 carbon atoms in the main chain and an aliphatic dicarboxylic acid unit having less than 4 carbon atoms in the main chain.
[4] The resin composition according to any one of [1] to [3], wherein the content of aromatic unit in the aromatic-aliphatic polyester (B2) is from 5 to 95 mol%.
[5] The resin composition according to any one of [1] to [4], wherein the content of aliphatic diol units in the biodegradable polyester (B) is from 60 to 99 mol%.
[6] The resin composition according to any one of [1] to [5], wherein the aliphatic polyester (B1) is contained in an amount of 25 to 50 parts by weight; and the aromatic-aliphatic polyester (B2) is contained in an amount of 5 to 15 parts by weight, based on 100 parts by weight of the polyvinyl alcohol-based resin (A).
[7] The resin composition according to any one of [1] to [6], wherein the acid-containing group in the polyvinyl alcohol-based resin (A) is a sulfonic acid or its salt-containing group.
[8] The resin composition according to any one of [1] to [7], wherein the polyvinyl alcohol-based resin (A) contains 0.5 to 3 mol% of a structural unit represented by the formula (3-1), (3-2), or (3-3), as a structural unit having the sulfonic acid or its salt-containing group. 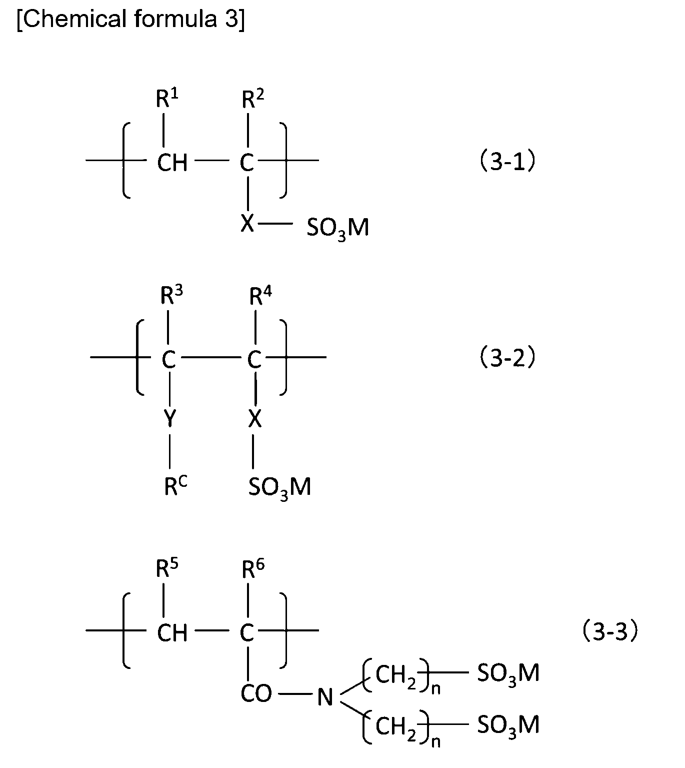 In the formulas, M is a hydrogen, alkali metal, or ammonium group, and X and Y each is independently a linking group.

The present invention also includes a melt-molded article comprising the resin composition according to any one of [1] to [8]. Specifically, the melt-molded article of the invention comprises the resin composition according to any one of [1] to [8], and preferably exhibits biodegradability of 60% or more, as measured in accordance with OECD 301F.

The form of the melt-molded article of the invention is not particularly limited; however, a filament form is preferred.

The present invention also includes a support material comprising the resin composition according to any one of [1] to [8].

### EFFECT OF THE INVENTION

The resin composition of the invention exhibits excellent water solubility and biodegradability, and complies with the requirements specified by OECD standards regarding easy decomposition, making it suitable for use in disposable molded articles. The resin composition is also suitable for use as a support material in fused deposition modeling, as it exhibits excellent formability, such as providing complementary support in building a model structure and enabling stable filament feeding. In addition, because the resin composition dissolves readily in water, the wastewater generated after the support structure is removed from the built object can be discharged without any specific treatments.

### BRIEF DESCRIPTION OF THE DRAWINGS

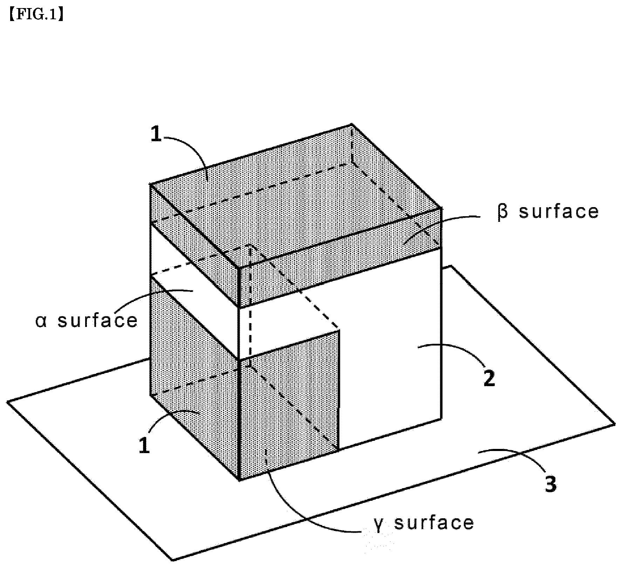

FIG. 1 depicts a diagram for explaining the measurement method performed in Examples.

### EMBODIMNT FOR CARRYING OUT THE INVENTION

Hereinafter. the present invention will be described in detail, but the following are mere examples of desirable embodiments.

### [Resin Composition]

The resin composition of the invention comprises (A) a polyvinyl alcohol-based resin modified with acid-containing group and (B) a biodegradable polyester having a specific structure.

Each component will be described below.

### (A) Polyvinyl alcohol-based resin modified with acid-containing group

Regarding the polyvinyl alcohol-based resin modified with acid-containing group (A) used in the resin composition of the invention, examples of the acid-containing groups include a carboxyl group, a sulfonic acid group, a maleic acid group, an itaconic acid group, an acrylic acid group, a methacrylic acid group, a phosphoric acid group, a phosphonic acid group, an amino group, and salts thereof. One or more of these acid-containing groups may be contained. Of the above acid-containing groups, a sulfonic acid group or a salt thereof is preferred because it allows the resulting modified PVA-based resin to improve its excellent heat resistance and water solubility. The PVA-based resin modified with a sulfonic acid or its salt-containing group, which is a PVA-based resin having a sulfonic acid or its salt-containing group, will be described in detail below.

### (A-1) PVA-based resin modified with sulfonic acid or its salt-containing group

A PVA-based resin having a group containing a sulfonic acid or a salt thereof (herein referred to as "PVA-based resin modified with sulfonic acid or its salt-containing group (A-1)") comprises a vinyl alcohol unit represented by the general formula (1), a vinyl ester unit represented by the general formula (2), and a structural unit represented by the general formula (3-1), (3-2), or (3-3). The vinyl alcohol unit is an essential structural unit of the PVA-based resin. The vinyl ester unit is contained as an unsaponified portion when the saponification degree is less than 100%. The structural unit (3-1), (3-2), or (3-3) contains a group of a sulfonic acid or a salt thereof in the side chain of the unit.

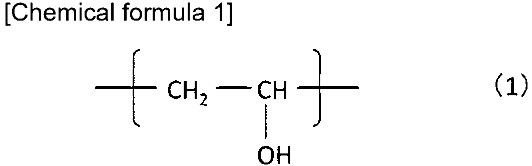

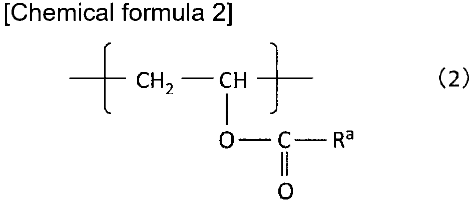

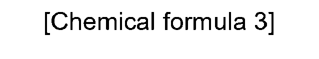

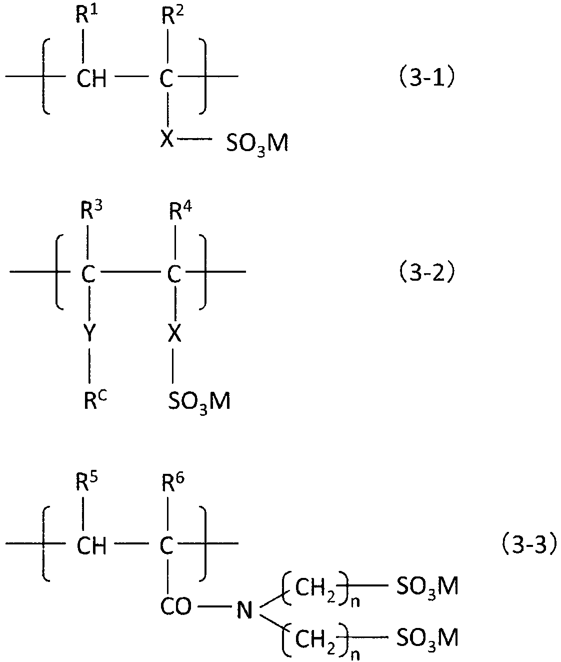

The vinyl alcohol unit (1) and the vinyl ester unit (2) both are derived from a vinyl ester compound used as a monomer making up the PVA-based resin.

Examples of the vinyl ester compound include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate and the like. Of these, vinyl acetate is preferably used because of economy.

Therefore, in the formula (2), R^{a} is an alkyl group having from 1 to 18 carbon atoms and depends on the vinyl ester compound used for a raw material for the synthesis of the PVA-based resin. R^{a} is preferably a methyl group, and therefore a preferred vinyl ester unit is vinyl acetate unit represented by the formula (2a).

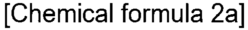

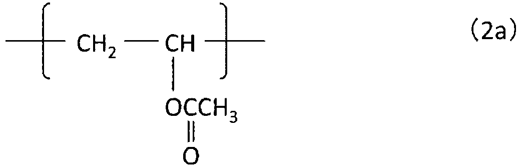

In "-SO₃M" in the formulas (3-1), (3-2) and (3-3), M indicates hydrogen, alkali metal or ammonium group. When M is hydrogen, the -SO₃M corresponds to sulfonic acid-containing group. When M is an alkali metal or ammonium, the -SO₃M corresponds to a salt of sulfonic acid-containing group. R¹, R², R³, R⁴, R⁵, and R⁶ in each formula is independently hydrogen, an alkyl group having from 1 to 4 carbon atoms. Each of X and Y is a linking group. Atypical linking group is an alkylene group having from 1 to 4 carbon atoms, ester bond, amide bond, ether bond, and the like. R^{c} may be a hydrogen, an alkyl group, or a sulfonic acid- or sulfonate-containing group represented by "-SO₃M" (M indicates a hydrogen, alkali metal or an ammonium group), or a -SO₃M-containing group.

The structural unit represented by the formula (3-1), which is a unit having a group containing sulfonic acid or a salt thereof, may be formed from an unsaturated monomer having a sulfonic acid or a salt thereof (hereinafter referred to as "sulfonic acid group-containing unsaturated monomer"). Examples of the sulfonic acid group-containing unsaturated monomer include olefin sulfonic acid (4-1), sulfoalkyl (meth)acrylamide (4-2) or (4-3), and sulfoalkyl (meth)acrylate (4-4), shown below. The linking groups X and Y are an alkylene group (-(CH₂) n-), an ester bond (-COO-), and a carbonyl bond (-CO-), an amide bond, or a combination thereof, depending on the type of unsaturated monomer containing a sulfonic acid group or the like to be used.

[Chemical formula 4-1] CH₂=CH-X-SO₃M (4-1)

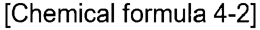

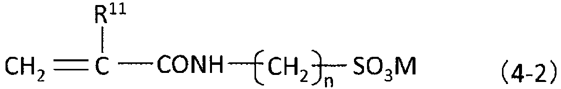

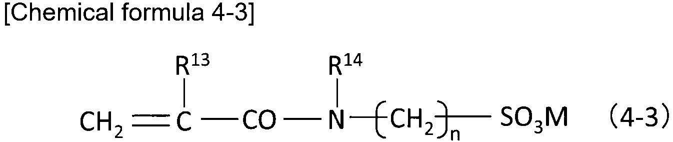

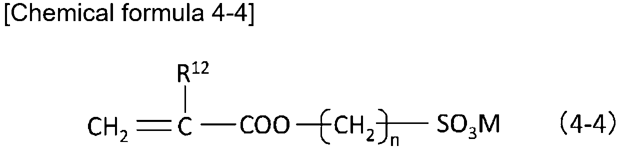

In the formulas (4-1), (4-2), (4-3), and (4-4), R¹¹, R¹², R¹³, and R¹⁴ each is independently hydrogen or an alkyl group having from 1 to 4 carbon atoms, n is an integer of 2 to 4, and M represents a hydrogen atom, an alkali metal or ammonium group.

Further, the structural unit having a group containing sulfonic acid or a salt thereof, represented by the formula (3-2), is formed in the case of a sulfoalkylmaleate represented below as an unsaturated monomer containing a sulfonic acid or the like.

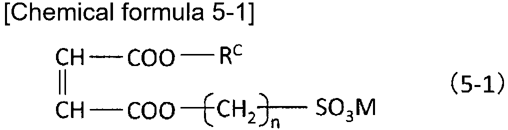

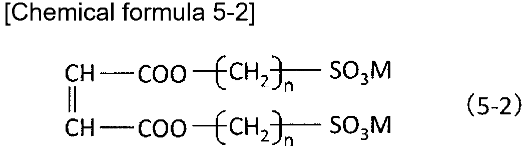

In the above formulas (5-1) and (5-2), n is an integer of 2 to 4, and M represents a hydrogen atom, an alkali metal or an ammonium group.

Further, the structural unit having a group containing sulfonic acid or a salt thereof, represented by the formula (3-3), is formed with use of sulfoalkyl (meth)acrylamide shown below or the like as an unsaturated monomer having a group containing a sulfonic acid or a salt thereof.

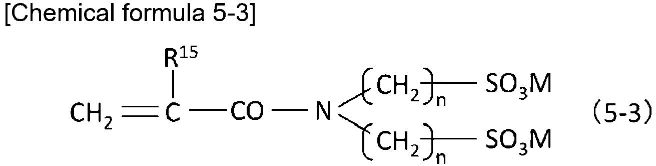

In the above formula (5-3), R¹⁵ is hydrogen or an alkyl group having from 1 to 4 carbon atoms, n is an integer of 2 to 4, and M represents a hydrogen atom, an alkali metal or ammonium group.

Specific examples of the above-mentioned olefin sulfonic acid include vinyl sulfonic acid, allyl sulfonic acid, and methallyl sulfonic acid, or a salt thereof.

Specific examples of the sulfoalkylmaleate include sodium sulfopropyl-2-ethylhexyl maleate, sodium sulfopropyl-2-ethylhexyl maleate, sodium sulfopropyl tridecyl maleate, sodium sulfopropyl eicosyl maleate and the like.

Specific examples of the sulfoalkyl (meth)acrylamide include sodium sulfomethylacrylamide, sodium sulfo-t-butylacrylamide, sodium sulfo-S-butyl acrylamide, sodium sulfo-t-butyl methacrylamide and the like.

Further, specific examples of the sulfoalkyl (meth)acrylate include sodium sulfoethyl acrylate and the like. In the case that an unsaturated monomer containing the aforementioned sulfonic acid group is introduced by copolymerization, olefin sulfonic acid or a salt thereof is preferably chosen.

The saponification degree (measured in accordance with JIS K 6726) of the (A-1) PVA-based resin having sulfonic acid or its salt-containing group used in the invention is preferably from 75 to 99 mol%, more preferably from 80 to 95 mol%, and even more preferably from 85 to 90 mol%. The PVA-based resin with an unduly low saponification degree is likely to soften due to insufficient heat resistance, whereas the PVA-based resin with an unduly high saponification degree tends to exhibit decreased water solubility.

The average degree of polymerization (measured in accordance with JIS K 6726) of the PVA-based resin modified with sulfonic acid or its salt-containing group (A-1) is preferably from 150 to 4000, more preferably from 250 to 1000, and further from 300 to 500.

If the PVA-based resin with an excessively low average degree of polymerization is contained in the resin composition, the melt viscosity of the resin composition tends to be low, and the strength of filaments or other products formed by melt molding tends to be insufficient. In addition, when the resin composition is used as a support material, it may be prone to sagging during fused deposition modeling, and the filamentary support material may be prone to breaking during the process. On the other hand, the PVA-based resin with an excessively high average degree of polymerization tends to make the melt viscosity of the resin composition unduly high, which may lead to thermal decomposition during the process of forming the resin composition into filamentary shape by melt-molding. In addition, the more the average degree of polymerization, the less water solubility, making the time for dissolution by washing with water becomes longer.

Further, the PVA-based resin modified with a sulfonic acid or its salt-containing group (A-1) has a modification rate of preferably 0.01 to 10 mol%, more preferably from 0.1 to 5 mol%, and particularly preferably from 0.5 to 3 mol%. The modification rate is a percentage of the structural unit having a sulfonic acid or its salt-containing group, based on the PVA-based resin (A-1) molecule. The (A-1) PVA-based resin with an unduly low modification rate may have a relatively low charge density and exhibit insufficient performance as a protective colloid. This causes to impair compatibility with biodegradable polyester (B). On the contrary, the PVA-based resin with unduly high modification rate may be lowered in heat resistance of the support material. In addition, such PVA-based resin modified with a sulfonic acid or its salt-containing group may be difficult to be synthesized.

The PVA-based resin modified with a sulfonic acid or its salt-containing group (A-1) can be produced by any of the following methods:
(1) copolymerizing a vinyl ester-based monomer with an unsaturated monomer containing a sulfonic acid, followed by saponification of the resulting copolymer;
(2) polymerizing a vinyl ester-based monomer in the presence of a chain transfer agent and a functional compound - such as an alcohol, an aldehyde or a thiol-each having a sulfonic acid group or a salt thereof, followed by saponification of the resulting polymer;
(3) treating a PVA-based resin with bromine, iodine, or the like, and heating the treated PVA-based resin in an aqueous solution of acidic sodium sulfite;
(4) heating a PVA-based resin in a concentrated aqueous sulfuric acid solution; or
(5) acetalizing a PVA-based resin modified with an aldehyde compound containing a sulfonic acid group or a salt thereof.

Of these, the method of (1) is preferable. Specifically, a method comprising copolymerizing a vinyl ester-based monomer with an unsaturated monomer containing a sulfonic acid group, followed by saponification of the resulting copolymer, may meet safety and workability requirements in the production process.

Besides the vinyl ester monomer and the sulfonic acid or its salt-conaining vinyl monomer, another monomer may be copolymerized in the PVA-based resin modified with sulfonic acid or its salt-containing group, at a ratio of 1 mol% or less. Examples of the other monomers include olefins such as ethylene, propylene, isobutylene, α-octene, α-dodecene, and α-octadecene; hydroxy group-containing α-olefins such as 3-buten-1-ol, 4-penten-1-ol, 5-hexen-1-ol, 3,4-dihydroxy-1-butene and their derivatives such as acylated products; unsaturated acids such as acrylic acid, methacrylic acid, crotonic acid, maleic acid, maleic anhydride, itaconic acid, undecylenic acid, and salts, monoesters, or dialkyl esters thereof; nitriles such as acrylonitrile and meta-acrylonitrile; amides such as acrylamide and methacrylamide; olefin sulfonic acids such as ethylene sulfonic acid, allyl sulfonic acid, methallyl sulfonic acid or salts thereof; alkyl vinyl ethers; vinyl compounds such as dimethylallyl vinyl ketone, N-vinylpyrrolidone, vinyl chloride, vinylethylene carbonate, 2,2-dialkyl-4-vinyl-1,3-dioxolane, and glycerin monoallyl ether; substituted vinyl acetates such as isopropenyl acetate and 1-methoxyvinyl acetate, vinylidene chloride, 1,4-diacetoxy-2-butene, 1,4-dihydroxy-2-butene, vinylene carbonate and the like.

The method of copolymerization of the vinyl ester monomer and the unsaturated monomer containing a sulfonic acid group or the like, and optionally used other monomers according to needs, is not particularly limited. A known method such as bulk polymerization, solution polymerization, suspension polymerization, dispersion polymerization, or emulsion polymerization can be adopted, but solution polymerization is typically adopted.

The method of charging the monomers for copolymerization is not particularly limited, and an appropriate method such as batch charging, split charging, continuous charging and the like may be adopted.

Typical examples of the solvent used in such copolymerization include lower alcohols such as methanol, ethanol, isopropyl alcohol, n-propanol and butanol; ketones such as acetone and methyl ethyl ketone. Of these, alcohols having from 1 to 3 carbon atoms, in particular, methanol is preferably used for industry.

The amount of the solvent used may be appropriately determined depending on an intended degree of polymerization with taking into consideration the chain transfer constant of the solvent. For instance, in the case of methanol, the amount of methanol is set within the range of 0.01 to 10 (mass ratio), preferably about from 0.05 to 3 (mass ratio), in terms of S (solvent) / M (monomer) ratio.

A polymerization catalyst is used in the copolymerization. Examples of the polymerization catalyst include known radical polymerization catalysts such as azobisisobutyronitrile, acetyl peroxide, benzoyl peroxide and lauryl peroxide, and low temperature active radical polymerization catalysts such as azobisdimethylvaleronitrile and azobismethoxydimethylvaleronitrile. An appropriate amount of the polymerization catalyst is determined according to an intended polymerization rate, which depends on the type of catalyst. In the case of azoisobutyronitrile or acetyl peroxide, an appropriate amount may be preferably selected from the range of 0.01 to 1.0 mol%, particularly 0.02 to 0.5 mol%, with respect to the vinyl ester-based monomer.

The reaction temperature of the copolymerization may be selected from the range of about 30 °C to a boiling point, more specifically 35 to 150 °C, preferably 40 to 75 °C, depending on the solvent and pressure used.

Then, the resulting copolymer is saponified. The saponification is carried out by dissolving the copolymer in an alcohol or a hydrous alcohol in the presence of an alkali catalyst or an acid catalyst.

Examples of the alcohol include lower alcohols such as methanol, ethanol, propanol and tert-butanol, and among them, alcohols having from 1 to 3 carbon atoms, particularly methanol is preferably used. The concentration of the copolymer in the alcohol is appropriately selected depending on a viscosity of the system, but is usually selected from the range of 10 to 60% by weight. Examples of catalysts used for saponification include hydroxides of alkali metals such as sodium hydroxide, potassium hydroxide, sodium methylate, sodium ethylate, potassium methylate and lithium methylate, and alkaline catalyst such as alcoholate; acid catalyst such as sulfuric acid, hydrochloric acid, nitric acid, metasulfonic acid, zeolites, cation exchange resin and the like.

An appropriate amount of the saponification catalyst is selected depending on the saponification method, an intended saponification degree, and so on. In the case of an alkaline catalyst, a suitable amount ranging from 0.1 to 30 mmol, preferably 2 to 15 mmol, with respect to 1 mol of monomer as the combined amount of unsaturated vinyl ester monomer and sulfonic acid group or the like-containing unsaturated monomer, is suitable.

The reaction temperature of the saponification is not particularly limited, but is preferably from 10 to 60 °C, particularly from 20 to 50 °C.

Thus, the (A-1) PVA-based resin modified with a sulfonic acid or its salt-containing group used in the invention can be obtained.

The PVA-based resin modified with a sulfonic acid or its salt-containing group obtained by the method mentioned above may contain Na acetate as a byproduct during the production process.

### (B) Biodegradable polyester

The biodegradable polyester (B) used in the invention comprises a combination of (B1) an aliphatic polyester containing an aliphatic diol unit and an aliphatic dicarboxylic acid unit; and (B2) an aromatic-aliphatic polyester containing an aliphatic diol unit, an aliphatic dicarboxylic acid unit, and an aromatic dicarboxylic acid unit, wherein the mixing ratio (B1/B2) of the aliphatic polyester (B1) to the aromatic-aliphatic polyester (B2) is from 61/39 to 99/1.

### (B1) Aliphatic polyester containing an aliphatic diol unit and an aliphatic dicarboxylic acid unit

The aliphatic polyester (B1) is a polyester containing an aliphatic diol unit represented by the formula (11) and an aliphatic dicarboxylic acid unit represented by the formula (12) as essential constituents, and does not substantially contain an aromatic structural unit. 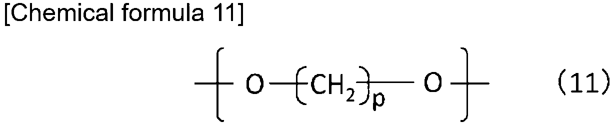 In the formula (11), p is an integer of 2 to 10, preferably 2 to 6. 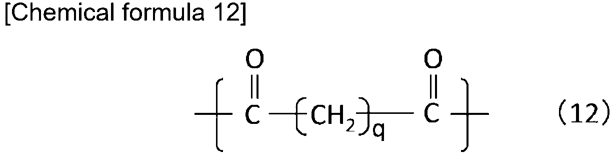 In the formula (12), q is an integer of 2 to 10.

The aliphatic diol which serves a unit represented by the formula (11) usually has 2 or more, but 10 or less carbon atoms. Examples of the aliphatic diol include ethylene glycol, 1,3-propanediol, 1,4-butanediol, and 1,4-cyclohexanedimethanol. Of these, diols having 2 or more and 4 or less carbon atoms are preferable, ethylene glycol and 1,4-butanediol are more preferable, and 1,4-butanediol is particularly preferable. The aliphatic diol unit as a constituent unit of the aliphatic polyester is not limited to one type. Two or more types of aliphatic diol units may be contained.

Examples of the aliphatic dicarboxylic acid serving the unit represented by the formula (12) include succinic acid, adipic acid, suberic acid, sebacic acid, dodecanedioic acid, and so on. The aliphatic dicarboxylic acid unit as a constituent unit of the aliphatic polyester is not limited to one type. Two or more types of aliphatic dicarboxylic acid units may be contained.

Where two or more types of aliphatic dicarboxylic acid units are contained, a combination of an aliphatic dicarboxylic acid unit with q being from 4 to 6 and an aliphatic dicarboxylic acid unit with q being less than 4 (e.g., succinic acid, oxalic acid, and malonic acid) is preferred, and a combination of adipic acid unit and succinic acid unit is particularly preferred.

In this case, aliphatic polyesters containing from 50 to 95 mol%, preferably 60 to 90 mol%, and more preferably 65 to 85 mol% of aliphatic dicarboxylic acid units with q less than 4, based on the total amounts of aliphatic dicarboxylic acid units, tend to exhibit an improved moldability and enhanced mechanical strength.

An extra unit derived from a hydroxycarboxylic acid represented by the formula (14) may be contained within a range that does not impair biodegradability (for example, 20 mol % or less, preferably 10 mol % or less).

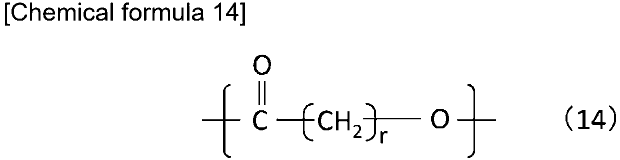

In formula (14), r is an integer of 1 to 10, preferably from 2 to 8, and more preferably of 4 to 6.

Hydroxycarboxylic acids serving a unit represented by the formula (14) include, for example, 4-hydroxybutyric acid, 5-hydroxyvaleric acid, 6-hydroxyhexanoic acid, glycolic acid, and lactic acid.

Specific examples of the aliphatic polyester (B1) used in the present invention include polybutylene succinate (PBS), polybutylene succinate adipate (PBSA), polyethylene succinate adipate (PESA), and so on.

A commercially available aliphatic polyester may be used. Examples of commercially available aliphatic polyester include Bionolle 3000 manufactured by Showa Polymer Co., Ltd.; "BioPBS FD92PM", which is a product name of polybutylene succinate adipate; "GS-PLA" manufactured by Mitsubishi Chemical Corporation, which is mainly composed of a condensation polymer of polyethylene succinate and/or succinic acid/1,4-butanediol/lactic acid.

The weight average molecular weight of the aliphatic polyester (B1) is usually between 10,000 and 500,000, preferably between 15,000 and 400,000, and particularly preferably between 20,000 and 300,000. An aliphatic polyester with excessively large weight average molecular weight tends to produce molded articles, such as filaments, with insufficient strength. Such filamentary support material may result in a support structure that lacks mechanical integrity. Furthermore, the aliphatic polyester with excessively large average molecular weight is difficult to dissolve uniformly in water during rinsing process.

Aliphatic polyesters with aforementioned characteristics exhibit excellent water solubility and biodegradability, depending on the type of aliphatic dicarboxylic acid serving a structural unit. However, they tends to be difficult to have satisfactory strength and adhesion to model materials.

### (B2) Aromatic-aliphatic polyester

The aromatic-aliphatic polyester (B2) contains an aromatic dicarboxylic acid unit represented by the formula (13), in addition to the aliphatic diol unit represented by the formula (11) and the aliphatic dicarboxylic acid unit represented by the formula (12) having q (number of carbon atoms) of 2 or more.

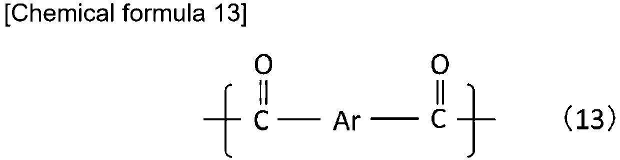

In the formula (13), Ar represents an aromatic ring.

Examples of the aromatic dicarboxylic acid serving the unit of the formula (13) include terephthalic acid, isophthalic acid, and naphthalenedicarboxylic acid. Among them, terephthalic acid and isophthalic acid are preferred, and terephthalic acid is particularly preferred. The aromatic dicarboxylic acid may also include an aromatic dicarboxylic acid where the aromatic ring is modified with sulfonate.

In the formula (12) representing the aliphatic dicarboxylic acid unit contained in the aromatic-aliphatic polyester (B2), the number of carbon atoms constituting the main chain, i.e., "q", is an integer of 2 to 10, preferably 4 to 6. Examples of the aliphatic dicarboxylic acid serving the unit (formula (12)) include succinic acid, adipic acid, suberic acid, sebacic acid, and dodecanedioic acid. The aliphatic dicarboxylic acid serving the structural unit is not limited to one type. The structural unit may be derived from two or more types of aliphatic dicarboxylic acids. Of these aliphatic dicarboxylic acids, adipic acid is preferably used.

In the aromatic-aliphatic polyester (B2), the content of the aromatic dicarboxylic acid units is preferably from 5 mol% to 95 mol%, more preferably 35 mol% to 65 mol%, and particularly preferably 40 mol% to 65 mol%, considering the balance between heat resistance and biodegradability. The total content of dicarboxylic acid units, i.e. the combined content of the aliphatic and the aromatic dicarboxylic acid units, is defined as 100 mol%.

Examples of the aromatic-aliphatic polyester (B2) include polybutylene adipate terephthalate, polyethylene adipate terephthalate, and the like.

Commercially available products, such as "Ecoflex" (product name) from BASF Corporation, Biomax (registered trademark) from DuPont, and EasterBio (registered trademark) from Eastman Chemical Company, may be used. The "Ecoflex" contains a condensation polymer of adipic acid/terephthalic acid and 1,4-butanediol as its main component.

The aromatic-aliphatic polyester (B2) improves strength of the fabricated object and enhances adhesion to various modeling materials, depending on types and content ratios of the aliphatic and aromatic dicarboxylic acid units. On the other hand, due to its poor dispersibility, the time required for complete dissolution tends to be longer than that of the aliphatic polyester (B1) even when used in combination with a sulfonic acid-modified PVA-based resin, which has excellent water solubility. In addition, its biodegradability tends to be inferior to other biodegradable resins.

The weight average molecular weight of the aromatic-aliphatic polyester (B2) is usually between 10,000 and 400,000, preferably between 15,000 and 300,000, and particularly preferably between 20,000 and 200,000. The aromatic-aliphatic polyester with unduly high weight average molecular weight tends to exhibit poor fluidity. When used as support material, this poor fluidity reduces precision in modeling. On the other hand, the aromatic-aliphatic polyester with unduly low average molecular weight tends to have reduced flexibility, making the filament made from it prone to breaking.

### <Mixing ratio of aliphatic polyester (B1) and aromatic-aliphatic polyester (B2)>

The aliphatic polyester (B1) with aforementioned units usually has a relatively low crystallinity and is easily decomposed by enzymes, which improves its biodegradability. However, this depends on the type of aliphatic dicarboxylic acid unit it contains. Unduly low crystallinity tends to make the material to soften and reduce its tensile strength at high temperatures, limiting its use in melt-molding. Also, if a filamentary support material with unduly low crystallinity is used for fused deposition modeling, it softens before entering the nozzle. This causes defective feeding issues and hinders the printing process. Such a feeding problem due to softened filamentary support material is especially common in a deposition modeling with a 3D printer where the chamber is set at a relatively high temperature.

On the other hand, the aromatic-aliphatic polyester (B2) generally exhibits higher crystallinity based on the inclusion of aromatic dicarboxylic acid units, and greater tensile strength at elevated temperatures compared to aliphatic polyesters. The aromatic-aliphatic polyester (B2) also tends to adhere well to model materials such as ABS. However, these properties depend on the type of aliphatic dicarboxylic acid units contained and the ratio of aromatic dicarboxylic acid units to aliphatic dicarboxylic acid units. Due to their high crystallinity, the biodegradability of aromatic-aliphatic polyesters is typically inferior to that of aliphatic polyesters. Therefore, even when aromatic-aliphatic polyester (B2) is used alone as a biodegradable resin and combined with a highly biodegradable, water-soluble acid-modified PVA-based resin (A), the resulting composition tends to be unsuitable both as a support material - where strict biodegradability is required - and as a melt-molding material for disposable molded articles.

The resin composition of the invention comprises an acid-modified PVA-based resin and a mixture of the aliphatic polyester (B1) and the aromatic polyester (B2) as biodegradable resins. This combination improves the flexibility, formability, and biodegradability of the resin composition without impairing the water solubility of the acid-modified PVA-based resin.

In particular, the mixing ratio (B1/B2) of the aliphatic polyester (B1) to the aromatic polyester (B2) is preferably from 61/39 to 99/1 by weight, more preferably from 65/35 to 98/2, even more preferably from 70/30 to 95/5, and particularly preferably from 75/25 to 90/10. A mixing ratio within this range can suppress the decrease in biodegradability and water solubility caused by the inclusion of the aliphatic-aromatic polyester (B2), and achieve a biodegradability of 60% or more as required for ready decomposition in accordance with the OECD standard.

The content of the aliphatic diol unit in the biodegradable resin (B) is preferably between 60 and 99 mol%, more preferably between 70 and 98.5 mol%, and even more preferably between 85 and 97 mol%. Setting the content within this range can balance biodegradability and formability.

Another possible option for enhancing the biodegradability is to combine with a biodegradable resin with better biodegradability than aliphatic polyester, such as polylactic acid or polylactone. Polylactic acid or polylactone that does not contain an aliphatic diol unit, and therefore, when combined with acid-modified PVA-based resin, the composition may lack the strength required for a molded article. Moreover, when the composition is used as a support material, it tends to exhibit insufficient adhesion to ABS resin, a typical model material, resulting in unsatisfactory formability. Considering these factors, it is more effective to combine with aliphatic polyester (B1) into a resin composition used as a support material.

### <Characteristics of biodegradable polyester (B)>

The melt flow rate (MFR) of the biodegradable polyester as measured at 190°C under a load of 2.16 kg is usually 1.0 g/10 minutes or more, preferably 2.0 g/10 minutes or more, and most preferably 3.0 g/10 minutes or more, but usually 6.0 g/10 minutes or less, preferably 5.0g/10 minutes or less, and more preferably 4.0 g/10 minutes or less. When the MFR is less than 1.0 g/10 minutes, the resin composition lacks sufficient flowability during melting. This makes it difficult to form an appropriate sea-island morphology between the PVA-based resin and the biodegradable polyester in a resin composition prepared during the melt-kneading. As a result, the strength of the support structure formed from the support material and/or the melt-molded article tends to be reduced. Conversely, when the MFR exceeds 6.0 g/10 min, a morphology in which islands of biodegradable polyester is too small is formed in the resin composition prepared during melt-kneading. This may result in a filament with insufficient flexibility, making the resin composition unsuitable as a support material.

### <Content of biodegradable polyester (B)>

In the support material, the combined content of the aliphatic polyester (B1) and the aromatic-aliphatic polyester (B2) is preferably from 15 to 70 parts by weight, more preferably from 20 to 60 parts by weight, and even more preferably from 30 to 50 parts by weight, based on 100 parts by weight of the acid-modified polyvinyl alcohol-based resin (A). Unduly high ratio of the biodegradable polyester (B) tends to reduce water solubility, which leads to reduce cleaning and removal workability in the rinsing process of the object fabricated by fused deposition modeling.

On the other hand, unduly small ratio of biodegradable polyester (B) tends to reduce affinity with the model material, resulting in decreased modeling performance. In addition, a support material with a low content of biodegradable polyester (B) exhibits poor flexibility, and therefore, its filament form is likely to break during the feeding process for fused deposition modeling.

Considering these characteristics, the aliphatic polyester (B1) is preferably included in the support material in an amount of 12 to 55 parts by weight, more preferably 20 to 50 parts by weight, even more preferably 28 to 45 parts by weight, and particularly preferably 30 to 40 parts by weight, based on 100 parts by weight of the PVA-based resin (A) in the support material. If the content of the aliphatic polyester (B1) is too low, the filamentary support material is likely to break during fused deposition modeling due to insufficient flexibility, and its adhesiveness to the layered object formed during fused deposition modeling tends to decrease. On the other hand, if the content of the aliphatic polyester (B1) is too high, the water solubility of the support material decreases, and the time required for removal by washing with water becomes longer.

In addition, the content of aromatic-aliphatic polyester (B2) in the support material is preferably from 1 to 20 parts by weight, more preferably 2 to 15 parts by weight, and even more preferably 3 to 10 parts by weight, based on 100 parts by weight of the PVA-based resin (A). When the content of aromatic-aliphatic polyester (B2) is too low, the filament becomes excessively soft and exhibits reduced heat resistance during fused deposition modeling or printing, making it difficult to feed the filament properly. Conversely, when the content of aromatic-aliphatic polyester (B2) is too high, biodegradability tends to be insufficient.

### (D) Other components

### (D-1) Other PVA-based resins

PVA-based resins other than the acid-modified PVA-based resin may be contained in the resin composition of the invention, provided that does not impair compatibility with the biodegradable polyester (B), specifically, in amount of 30% by weight or less, preferably 10% by weight or less of the total PVA-based resins. Examples of the other PVA-based resin include an unmodified PVA-based resin or another modified PVA-based resin.

### (D-2) Other biodegradable polymers

As the biodegradable polymer, biodegradable polyesters other than the (B1) or (B2), or other biodegradable polymers may be contained in the resin composition of the invention, as long as their contents are within a range that does not impair biodegradability and formability of the resin composition, specifically 10% by weight or less, preferably 5% by weight or less of the biodegradable polyester (B).

Examples of other biodegradable polymers include synthetic biodegradable polymers such as polycaprolactone and polylactic acid; natural polymers such as modified starch and cellulose starch.

### (D-3) Filler

The disclosed resin composition may optionally contain a filler, depending on the required characteristics of the molded article. As the filler, a biodegradable substance or a product of nature is preferably used. Examples of biodegradable fillers include starch, cellulose, and other biodegradable plastics. Examples of products of nature include talc, silica, calcium carbonate, and montmorillonite. The average particle size of such a filler is usually from 0.1 to 50 µm, more preferably from 5 to 30 µm, and particularly preferably from 10 to 20 µm. A filler with excessively small particle size tends to resist integration into the resin during the kneading process, while a filler with excessively large particle size can lead to surface roughness and reduced mechanical strength in the molded article. Additionally, such fillers may remain dispersed in the waste liquid (PVA-based resin aqueous solution) generated during water-washing process for removing the support structure. Therefore, they must be effectively isolated and removed from the waste liquid.

The average particle size described herein, refers to a particle size D50 measured by laser diffraction method.

The appropriate filler content varies depending on the application. When the resin composition is used as a support material, the filler content in the support material is preferably 0.3 to 40% by weight, more preferably 2 to 30% by weight, and particularly preferably 5 to 10% by weight. An excessively low filler content may result in insufficient performance. Conversely, when used as a support material, an excessively high filler content tends to produce a support structure with a rough surface or reduced strength.

### (D-4) Other ingredients

In addition to the aforementioned ingredients, the disclosed resin composition may optionally contain a known additive such as plasticizer, antioxidant, colorant, antistatic agent, UV absorber, lubricant, and other thermoplastic resins. When additives are contained, their combined content is preferably 20% by weight or less, more preferably 10% by weight or less, even more preferably 1% by weight or less, and particularly preferably 0.5% by weight or less, in order to avoid the reduction of its disposability and environmental compatibility. As the additive, an environmentally friendly (eco-friendly) material such as a material with biodegradability or bio-derived material is preferably selected.

The disclosed resin composition having the above-mentioned formulation, may be used in various forms such as powder, pellets, films, filaments, and molded articles. Its form may be selected depending on the intended application.

### <Support material used for fused deposition modeling and preparing method thereof>

A support material as a typical application of the resin composition of the invention, in particular, support material for fused deposition modeling, and a method for preparing the same, will be described below.

The support material of the invention includes herein disclosed resin composition.

The form of the support material is not particularly limited. It may be in a pellet or film-like form, which are common forms of resin compositions; however, filamentary form is preferred.

The filamentary support material can be prepared by melt-kneading a resin composition using a single-screw extruder, extruding it into filamentary form, and cooling the extruded composition. The filamentary support material is usually provided as a wound material on a reel.

Since the disclosed resin composition is appropriately flexible and strong, it is suitable for a support material in applications that require to stable filament feeding over a long period of time, such as in 3D printers where the filamentary resin compositions are continuously fed.

The filamentary support material is usually provided in a form of being wound on a reel. It is manufactured from a pelleted resin composition obtained by melt-kneading with a twin-screw extruder. The pelleted resin composition is then remelted and kneaded using a single-screw extruder, extruded from a one-hole or multi-hole strand die into a filament with a diameter of 1.5 to 3.0 mm, cooled and solidified by air cooling, and finally wound onto a reel. The filamentary support material thus prepared is convenient because it can be extruded through the head together with the model material during fused deposition modeling. The filamentary support material is required to meet the following criteria:
- Flexibility and toughness to withstand the winding process onto the reel without breaking;
- Sufficient rigidity to allow the filament extruded from the head to follow the movement of the nozzle or platform without delay during the printing process; and
- Stable feeding performance, even when the chamber is set to a relatively high temperature.
The support material of the present invention can satisfy these requirements.

Furthermore, the support material described herein has a biodegradability of 60% or more, which is classified as readily biodegradable according to OECD 301F evaluation. As a result, the waste liquid, i.e. aqueous solution of the support material, generated after washing off the support structure from the object formed by fused deposition modeling can be treated as biodegradable.

Therefore, even though wastewater treatment regulations after fused deposition modeling are becoming increasingly strict, the wastewater resulting from rinsing objects with water (including the dissolved support material) can be discharged.

### [Object formed by fused deposition modeling and method for obtaining a target three-dimensional structure]

Next, we will explain an object formed by fused deposition modeling with a support material of the invention, and a method for obtaining a target three-dimensional structure.

The object formed by fused deposition modeling (printed object) as described herein, is produced in the process of creating a target three-dimensional structure, referred to as a model structure. This printed object comprises both the support structure and the model structure.

A method for producing a three-dimensional structure with a desired shape (i.e. model structure) using a support material described herein, comprises extruding filaments of both the support and model materials in their softened and molten states. These materials are deposited layer by layer onto previously extruded and solidified layers, resulting in a composite structure including, or essentially consisting of, the supporting structure and the model structure. The final step involves bringing the composite structure into contact with water.

Examples of model materials (thermoplastic resins) capable of applying to the disclosed support material include polylactic acid (PLA), acrylonitrile-butadiene-styrene copolymer (ABS), polyamide (PA), polycarbonate (PC), polyethylene terephthalate (PET), glycol-modified polyethylene terephthalate (PETG), polyhydroxyalkanoate (PHA), wood-filled composite materials, metal-filled composite materials, carbon fiber-filled composite materials, polyvinyl butyral (PVB), thermoplastic elastomers (TPE), thermoplastic polyurethanes (TPU), polyolefins, polypropylene (PP), acrylonitrile styrene acrylate (ASA), polyacrylate, polymethacrylate, polystyrene (PS), polyoxymethylene (POM), and mixtures thereof.

In this method for producing a three-dimensional structure, a fusion deposition modeling type device - device used for manufacturing an object by fused deposition modeling - which includes multiple heads capable of extruding the model material and the support material in a form of filaments may be used as a device for forming a structure layer by layer. Examples of the devices include Create (Flashforge), Eagleed (Rays Enterprises), MBot Grid II (3D Systems), NJB-200W (Ninjabot), and EVO (Airwolf), and the like dual-head type devices.

Strands or filaments of the model material and the support material are independently fed to respective heads in the device, where they are heated, melted, and sequentially extruded to fabricate a designed shape layer by layer.

The head temperature is appropriately selected depending on the melting points and/or softening points of the model material and support material used, and is usually set between 150°C and 300°C. In addition, extrusion is performed at a pressure of 200 to 1000 psi, and the layer pitch is usually from 0.04 to 0.2 mm.

Subsequently, the melt-extruded support material and model material are solidified by cooling. Additional layers of melt-extruded support and model materials are then deposited onto the previously solidified layers, progressively forming a three-dimensional object including the final model structure.

The softened or molten filaments at the nozzle head are extruded onto the stage (platform) one after another and are layered to form a designed shape. The filamentary support material is melted by being pressed against the high-temperature nozzle that moves in the X, Y, and Z directions, and the molten resin is delivered through the nozzle hole onto the stage or deposited resins on the stage to fabricate a structure layer-by-layer. To ensure stable nozzle movement speed (modeling speed) and modeling accuracy, the filamentary support material must be fed from the reel with a constant diameter and deposited continuously during the modeling process. In this regard, if the support material lacks rigidity due to excessive softening, sufficient feed force cannot be obtained to press the filament against the inside of the high-temperature nozzle and eject it. This makes it difficult to extrude the molten resin from the nozzle, and as a result, desirable deposition modeling becomes difficult. Meanwhile, if the ambient temperature during fused deposition modeling-i.e., the temperature inside the chamber of the fused deposition modeling device-is set too low, the structure made from the model material may solidify prematurely. Premature solidification tends to cause large resin shrinkage. Such excessive deformation may hinder the formation of the desired model structure. For these reasons, the chamber of 3D printers is usually maintained at 40°C or higher, preferably 60°C or higher, and more preferably 65°C or higher.

The support material of the invention has improved biodegradability without excessively lowering the melting point or softening temperature. Therefore, it satisfies the requirements for formability, including adhesion to the model material and stable filament feeding.

The step of bringing an object formed by fused deposition modeling - comprising a support structure and a model structure-into contact with water corresponds to the step of washing and removing the support structure from the printed object. The method of washing and removing the support structure with water may involve immersion in water or heated water in a container, or rinsing with running water. During immersion, stirring or ultrasonic waves may be applied to shorten the removal time. The water temperature is preferably from about 25 to 80°C. For dissolving and removing the support structure, water or heated water in an amount of about 10 to 10,000 times the weight of the support structure is used.

A model (three-dimensional) structure, even with a complex geometry, can be obtained by removing the support structure from the printed object (i.e. object formed by fused deposition modeling).

### <Melt-molded article and Filaments>

Not only the wastewater (PVA-based resin aqueous solution) generated after washing off the support structure with water, but also the molded article made from the inventive resin composition exhibits ready biodegradability, as the resin composition meets the solubility standards defined by OECD 301F. Therefore, both can be disposed of or discharged without conducting any specific separation treatment. This indicates that the resin composition is suitable not only for support materials removal with a relatively large amount of running (or heated) water, but also for molded articles that do not require long-term durability, such as single-use or disposable food containers and packaging materials.

The present invention also includes melt-molded articles made from molding materials containing the disclosed resin composition.

The resin composition herein disclosed can be used as a melt-molding material, and can also provide molded articles with improved strength, flexibility, and heat resistance.

The filament of the invention is a representative example of the aforementioned melt-molded article and includes a filament formed from the resin composition of the invention.

The filament can be manufactured by the method described for manufacturing the filamentary support material.

### EXAMPLES

The present invention will be described in more detail below with reference to examples, but the present invention is not limited to the following examples as long as it does not apart from the gist of the invention. In the examples, "parts" refers to parts by weight.

### [Methods for measurement and evaluation]

### 1. Characteristics of modified PVA-based resin

### (1) Saponification degree

It was determined by analyzing the amount of alkali consumption required for hydrolysis of the remaining vinyl acetate units.

### (2) Degree of polymerization

A number average degree of polymerization is adopted for the degree of polymerization. The number average degree of polymerization is calculated based on the viscosity (mPa·s) of 4% aqueous solution at 20°C measured according to JIS K6726.

### (3) Modification rate

The amount of modifying group - structural unit having a group containing sulfonic acid or a salt thereof - was calculated from the integrated value measured by ¹H-NMR (300 MHz proton NMR, d6-DMSO solution, tetramethylsilane as an internal standard substance, 50 °C).

### 2. Filament feeding stability

A prepared filamentary support material was set in the nozzle head (220°C) of an FDM-type dual-head 3D printer (EVO, manufactured by Airwolf3D) and the printer was operated for 5 hours.

The set temperature of the chamber at which the filament stopped being extruded during printer operation was defined as the abnormal occurrence temperature. If excessively softened filament is pressed against the inside of the high-temperature nozzle and melted, the filamentary molten resin lacks sufficient force to be extruded from the nozzle. As a result, the fused deposition modeling operation cannot continue.

The printer was operated with the chamber temperature set at 30°C, 40°C, 50°C, 60°C, and 65°C, and the abnormal occurrence temperature was determined by checking whether filament feeding was successfully maintained. If normal feeding of the filamentary support material was achieved even at 65° C, the measured value was recorded as ">65°C"

### 3. Formability - Adhesion to model material

ABS resin was used as the model material, and the filamentary support material prepared below was used to evaluate the formability when forming an object shown in Fig. 1 with an FDM type dual head 3D printer (EVO manufactured by Airwolf3D). In Fig. 1, a support structure 1 made from the support material and an L-shaped model structure 2 made from the model material are built on a stage (platform) 3.

The nozzle head used for the model material was set at a temperature of 235°C, and the nozzle head used for the support material was set at a temperature of 210°C. The temperature of the stage as a platform was set to 80°C. The temperature inside the chamber was set to 65°C.

The object formed by fused deposition modeling was evaluated based on two main criteria: the deposition condition of the printed object and the adhesive strength between the support structure and the model structure on the α, β, and γ surfaces. Adhesive strength was assessed by manually testing whether the support and model structures could be separated by hand. The α surface refers to the interface where the model structure 2 is deposited onto the structure 1 made of the support material. The β surface is where the support structure 1 is deposited onto the model structure 2. The γ surface is the contact interface between the stage 3 and the support structure 1.

Excellent: no peeling was observed between the support structure and the model structure. Formability remained unaffected.
Good: printing was completed with adequate adhesion strength. However, slight deformation and warping were observed in certain areas.
Fair: a printed object was obtained, but the adhesion strength was weak enough that the support structure could be easily peeled off.

### 4. Water solubility - Complete dissolution time

The filament obtained by melt extruding the resin composition was cut into pieces 2 mm in length. Five grams of the resulting cut product was placed in a metal wire mesh basket with 90-mesh opening. The wire basket was immersed in a 500 ml water bath at 40°C under stirring (300 rpm), and the time until the pellets on the wire dissolved and disappeared, which corresponds to complete dissolution time (unit: minutes), was measured. The shorter the complete dissolution time, the better the water solubility.

### 5. Biodegradability (%)

Measurements were made in accordance with the method specified in OECD 301F. This method was conducted by examining the biodegradability of a substance after cultivation for 60 days under specified conditions. **If** the biodegradability is over 60%, it can be judged to be readily degradable.

### [Acid-modified PVA-based resin]

Two types of acid-modified PVA-based resins with the following characteristics were used.
(1) S-PVA1
   Saponification degree: 87.3 mol%
   Number average degree of polymerization: 385
   Content of structural units having sulfonic acid or its salt-containing group (modification rate): 1.5 mol%
(2) S-PVA2
   Saponification degree: 87.3 mol%
   Number average degree of polymerization: 370
   Content of structural units having sulfonic acid or its salt-containing group (modification rate): 1.7 mol%

### [Biodegradable Resins]

The following biodegradable resins were used:
- Polybutylene succinate adipate (PBSA (Bio-PBS from Mitsubishi Chemical Corporation), melting point: 84°C) with 74% in succinic acid unit content of all aliphatic dicarboxylic acid units
- Polybutylene succinate (PBS (Bio-PBS from Mitsubishi Chemical Corporation), melting point: 115°C)
- Polybutylene adipate terephthalate (PBAT (Ecoflex C1200 from BASF), melting point: 120°C), with 47% in terephthalic acid unit content of dicarboxylic acid units
- Polylactic acid (PLA) "4032D" from Ingeo Biopolymer was used.
- Polycaprolactone (PCL) "Capa (registered trademark) 6800" from Ingevity was used.

### [Preparation of Resin Composition]

### Resin composition Nos. 1 - 7:

A mixture of 100 parts of the sulfonic acid-modified PVA-based resin 1 or 2 (S-PVA1 or S-PVA2) and 42.9 parts by weight of a biodegradable resin indicated in Table 1 was fed to a twin-screw extruder to obtain a pellet-shaped composition. The pellets were melt-kneaded using the single-screw extruder under conditions shown below, extruded into a filament with a diameter of 2.85 mm, air-cooled on a belt, and wound on a reel.
Single screw extruder: Technovel SZW20GT-24MG-STD, 20mm diameter, L/D=24
Extrusion temperature: C1/C2/C3/H/D=170/190/200/210/210°C
Rotation speed: 40 rpm
Discharge rate: 1.0 kg/hr

The resin composition Nos. 1 to 7 prepared above were evaluated with respect to filament feeding stability, formability, water solubility, and biodegradability according to the aforementioned evaluation methods. The results are also shown in Table 1.

**[Table 1]**

| No | | | 1 | 2 | 3 | 4 | 5 | 6 | 7 |
|---|---|---|---|---|---|---|---|---|---|
| PVA Type | | | S-PVA 1 | S-PVA 1 | S-PVA 1 | S-PVA 2 | S-PVA 1 | S-PVA 1 | S-PVA 1 |
| Biodegradable resin (part/PVA100 parts) | PBSA | | 34.3 | 38.6 | 25.7 | - | 42.9 | - | - |
| | PBS | | - | - | - | - | - | - | - |
| | PBAT | | 8.6 | 4.3 | 17.2 | 42.9 | - | - | 8.6 |
| | PLA | | - | - | - | - | - | - | 34.3 |
| | PCL | | - | - | - | - | - | 42.9 | - |
| | B1/B2 ratio | | 9/1 | 8/2 | 6/4 | 0/16 | 10/0 | - | - |
| Evaluation | Filament feeding stability (°C) | | >65 | >65 | >65 | >65 | 40 | <30 | >65 |
| | Formability | *α* surface | Good | Excellent | Good | Good | Fair | Modeling process was interrupted | Fair |
| | | *β* surface | Excellent | Excellent | Excellent | Excellent | Fair | | Fair |
| | | *γ* surface | Excellent | Excellent | Excellent | Excellent | Good | | Good |
| | Water solubility (min) | | 40 | 42 | 44 | 41 | 30 | 30 | 45 |
| | Biodegradability (%) | | 62 | 65 | 58 | 59 | 69 | 72 | 42 |

| | | | | | | | | | |
|---|---|---|---|---|---|---|---|---|---|
| P B S A : Polybutylene succinate adipate P B S : Polybutylene succinate P B AT : Polybutylene adipate terephthalate P L A : Polylactic acid P C L : Polycaprolactone | | | | | | | | | |

No.6 is a case where polycaprolactone, known for its excellent biodegradability, was combined with an acid-modified PVA-based based resin. While this resin composition demonstrated superior water solubility and biodegradability, it suffered from poor filament feeding and formability. No. 5 is a case where only aliphatic polyester (B1) was used as a biodegradable resin. Like the use of polycaprolactone, it also showed excellent water solubility and biodegradability. Compared to No.6, this filament showed improved feeding stability and formability. However, it became overly flexible at high chamber temperatures, causing abnormal filament feeding, in the worst case, interruption of the modeling process. These findings indicate the filament in No.5 is unsuitable for a support material.

On the other hand, No.4, where a biodegradable polyester (B2) containing aromatic dicarboxylic acid units was used as the biodegradable resin, exhibited satisfactory filament feeding stability and formability. In addition, No.4 could be satisfied with water solubility by combining with S-PVA2 that has good water solubility (water dissolution rate) and improved compatibility with the biodegradable polyester. However, No.4 exhibited inferior biodegradability compared to when aliphatic polyester (B1) or polycaprolactone were used as the biodegradable polyester, as a result, No.4 did not satisfy the biodegradability standard. This means it cannot be used as a molding material for disposable article.

On the other hand, when the used biodegradable resin was a mixture of (B1) a biodegradable polyester containing an aliphatic dicarboxylic acid unit and (B2) a biodegradable polyester containing an aromatic dicarboxylic acid unit. Nos. 1 to 3, especially Nos. 1 and 2, where B1/B2 ratio was set within the range of 61/39 to 99/1, these filaments satisfied all requirements: filament feeding stability, formability, water solubility, and biodegradability.

No.7 and No.1 differ in the type of biodegradable resin combined with the aromatic-aliphatic polyester (B2), which contains an aromatic dicarboxylic acid unit. No.1 employed aliphatic polyester (B1), whereas No.7 employed polylactic acid. Although both resin compositions contained the same proportion of aromatic-aliphatic polyester (B2) in the biodegradable resin, No.7 showed insufficient improvement in formability, and more notably, exhibited reduced biodegradability compared to No. 4. In Nos. 1 to 3, a combination of aliphatic polyester (B1) and aromatic polyester (B2) was used as a biodegradable resin in the presence of the acid-modified PVA-based resin (A). The aliphatic polyester (B1) exhibits excellent compatibility with acid-modified PVA-based resin (A) and the aromatic polyester (B2), so these resin composition Nos. 1 to 3, appear to promote uniform dispersion of biodegradable polyester (B) in the PVA-based resin matrix. This uniform dispersion is believed to enhance the biodegradability of the material.

From these results, it can be seen that a resin composition comprising a biodegradable resin and acid-modified PVA-based resin wherein the biodegradable resin contains an aliphatic polyester (B1) and an aromatic-aliphatic polyester (B2) in a ratio of (B1)/(B2) = 61/39 to 99/1, is suitable for both a molding material for disposable articles, and a support material for which wastewater treatment is easy.

### INDUSTRIAL APPLICABILITY

The resin composition of the present invention exhibits excellent water solubility, biodegradability, and strong adhesion to various molding materials, and enhanced strength and flexibility. Therefore, it is well-suited for use both as a molding material for disposal articles, and as a support material in fused deposition modeling. When applied as a support material, it offers excellent formability, and can be easily removed by rinsing the printed object. Furthermore, the wastewater generated during this rinsing process can be readily biodegradable in accordance with OECD standards, allowing it to be safely discharged without a specific treatment. Therefore, it is useful for manufacturing three-dimensional structures from which the wastewater generated during the rinsing process can be safely released without requiring a specific treatment.

## Claims

1. A resin composition comprising (A) a polyvinyl alcohol-based resin modified with acid-containing group and (B) a biodegradable polyester,
wherein the (B) biodegradable polyester comprises
(B1) an aliphatic polyester containing an aliphatic diol unit and an aliphatic dicarboxylic acid unit having 2 to 10 carbon atoms in the main chain; and
(B2) an aromatic-aliphatic polyester containing an aliphatic diol unit, an aliphatic dicarboxylic acid unit having 2 to 10 carbon atoms in the main chain, and an aromatic dicarboxylic acid unit; and
wherein the content ratio of the (B1) to the (B2), (B1)/(B2), is from 61/39 to 99/1.

2. The resin composition according to claim 1, wherein the content of the (B) biodegradable polyester is from 30 to 60 parts by weight based on 100 parts by weight of the (A) polyvinyl alcohol-based resin.

3. The resin composition according to claim 1, wherein the (B1) aliphatic polyester is an aliphatic polyester containing an aliphatic dicarboxylic acid unit having 4 to 10 carbon atoms in the main chain and an aliphatic dicarboxylic acid unit having less than 4 carbon atoms in the main chain.

4. The resin composition according to claim 1, wherein the aromatic unit content of the (B2) aromatic-aliphatic polyester is from 5 to 95 mol%.

5. The resin composition according to claim 1, wherein the content of the aliphatic diol unit in the (B) biodegradable polyester is from 60 to 99 mol%.

6. The resin composition according to claim 1, wherein the (B1) aliphatic polyester is contained in an amount of 25 to 50 parts by weight, and the (B2) aromatic-aliphatic polyester is contained in an amount of 5 to 15 parts by weight, based on 100 parts by weight of the (A) polyvinyl alcohol-based resin.

7. The resin composition according to claim 1, wherein the acid-containing group in the (A) polyvinyl alcohol-based resin modified with acid-containing group is a sulfonic acid or its salt-containing group.

8. The resin composition according to claim 1, wherein the (A) polyvinyl alcohol-based resin modified with acid-containing group is a polyvinyl alcohol-base resin comprising 0.5 to 3 mol % of a structural unit represented by the formula (3-1), (3-2), or (3-3), as a structural unit having the sulfonic acid or its salt-containing group, and wherein M is hydrogen or an alkali metal or ammonium group, and X and Y each is independently an intervening group.

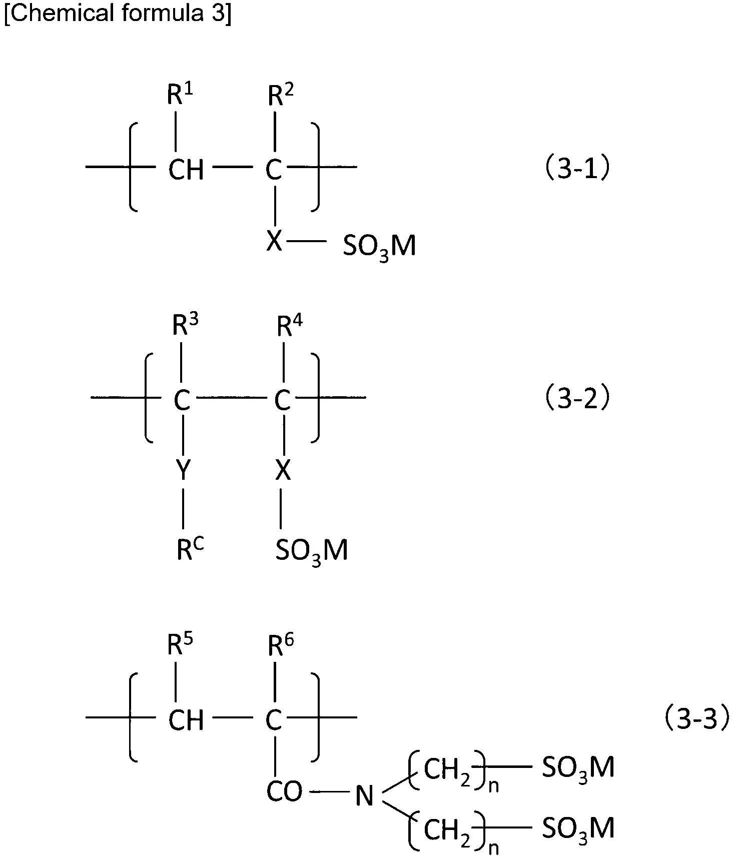

9. A melt-molded article comprising the resin composition according to any one of claims 1 to 8.

10. The melt-molded article according to claim 9, wherein the melt-molded article is a filament.

11. The melt-molded article according to claim 9, having a biodegradability of 60% or more, in accordance with a measurement specified by OECD 301F.

12. A support material comprising the resin composition according to any one of claims 1 to 8.
